# EUROPÄISCHE PATENTSCHRIFT

(11) **EP 1 208 671 B1**
(45) Veröffentlichungstag und Bekanntmachung des Hinweises auf die Patenterteilung: **22.02.2006**
(21) Anmeldenummer: 00954454.5
(22) Anmeldetag: 10.07.2000
(51) Int. Cl.: H04L 12/26, H04L 12/24

(54) **SYSTEM UND VERFAHREN ZUM TESTEN DER BELASTUNG WENIGSTENS EINER IP-GESTÜTZTEN EINRICHTUNG**
SYSTEM AND DEVICE FOR TESTING THE LOAD OF AT LEAST ONE IP BASED DEVICE
SYSTEME ET PROCEDE DESTINE AU TESTAGE DE LA CHARGE D'AU MOINS UN DISPOSITIF REPOSANT SUR UN PROTOCOLE INTERNET (IP)

(30) Priorität: 10.08.1999 DE 19937753
(43) Veröffentlichungstag der Anmeldung: 29.05.2002
(73) Patentinhaber: Deutsche Telekom AG, 53113 Bonn (DE)
(72) Erfinder: NEUMANN, Richard, D-67551 Worms (DE); SCHELLHAAS, Uwe, D-64397 Modautal (DE)
(74) Vertreter: Kampfenkel, Klaus
(86) Internationale Anmeldenummer: PCT/EP2000/006509
(87) Internationale Veröffentlichungsnummer: WO 2001/011822

(56) Entgegenhaltungen:
- EP-A- 0 883 271
- US-A- 5 669 000
- US-A- 5 937 165

## Beschreibung

Die Erfindung betrifft ein System sowie ein Verfahren zum Testen des Belastungszustandes wenigstens einer Einrichtung in einem auf einem IP (Internet Protocol)-Standard basierenden Kommunikationsnetz durch mehrere Nutzer.

Die Herausforderungen, mit denen Entwickler, Betreiber und Administratoren großer heterogener, auf dem IP-Standard beruhender Netzwerkkonfigurationen, wie z. B. dem Internet, konfrontiert werden, nehmen auf Grund des raschen Wachstums des Internets und in Folge einer rasanten Weiterentwicklung der Übertragungs- und Gerätetechnik immer mehr zu. Eine wichtige Aufgabe ist daher darin zu sehen, ein neues Netz oder Erweiterungen eines Netzes vor der eigentlichen Installation auf dessen Belastungszustand hin zu testen. Unter einem Lasttest versteht man ganz allgemein die gezielte Beanspruchung des Netzes, insbesondere der Router und Server, die an ein solches Netz angeschaltet sind, um daraus deren Verhalten hinsichtlich des geforderten Datendurchsatzes und der Antwortzeit auf eine Benutzer-Anforderung hin zu testen. Es besteht daher ein Bedürfnis an einem Testsystem, welches auf dem IP-Standard beruhende Netzkomponenten unter realen Lastbedingungen testen kann, um sicherstellen zu können, daß alle Netzkomponenten innerhalb ihrer vorgegebenen Leistunggrenzen fehlerfrei arbeiten.

Aus der US 5,669,000 ist ein System zum entfernten Testen eines Computersystems beschrieben, bei dem von einem Host-Computer 100 aus Instruktionen an sogenannte Target-Maschinen übersandt werden können, die in der Target-Maschine Aktionen durchführen, die ein Benutzer sonst vornehmen würde.

Aus der EP 0 883 271 sind ein Verfahren sowie ein System zum Verwalten von Daten-Dienstsystemen bekannt. Das Testverfahren ist geeignet, einen Testverkehr oder Testsignale zu erzeugen, die eine Datenübertragung simulieren, wenn Teilnehmer auf Dienste zugreifen. Das bekannte Testsystem umfasst dezentral angeordnete Testeinrichtungen, mit denen es möglich ist, über mehrere sogenannte Meßrouten das Verhalten sich gegenseitig beeinflussender Module oder das Verhalten einen Modules in dem Gesamtsystem zu bestimmen.

Der Erfindung liegt daher die Aufgabe zugrunde, ein Testsytem und ein Testverfahren zur Verfügung zu stellen, mit denen es möglich ist, die Belastung einer zu testenden Einrichtung durch mehrere Netz-Benutzer automatisch zu prüfen, wobei das Testsystem mit einer einzigen Bedienperson zentral betrieben werden kann.

Dieses technische Problem löst die Erfindung zum einen mit den Merkmalen des Anspruchs 1.

Ein Kerngedanke der Erfindung ist darin zu sehen, ein halbautomatisiertes Testsystem bereitzustellen, welches mehrere voneinander unabhängige IP-Verbindungen zu einem auf dem IP-Standard basierenden Kommunikationsnetz herstellen kann, um über diese Verbindungen voneinander unabhängige Testprozeduren laufen zu lassen, die jeweils den Operationen eines realen Netz-Benutzers entsprechen. Ein solches Testsystem ist, ganz allgemein gesprochen, zum Testen wenigstens einer Einrichtung in einem auf den IP-Standard basierenden Kommunikationsnetz in belastetem Zustand ausgebildet.

Das Testsystem umfaßt dazu wenigstens eine programmierbare Steuereinrichtung mit einer zugeordneten Speichereinrichtung, in der mehrere Sitzungeskripte ablegbar sind, die jeweils eine vorbestimmte Testprozedur enthalten. Unter einem Sitzungsskript ist in den gesamten Unterlagen die schriftlich fixierte Simulation eines realen Netz-Benutzers zu verstehen, der typische auf dem IP-Standard beruhende Aktionen, wie z. B. das Aufbauen einer Verbindung zu einem provider, das Herunterladen von Dateien auf einem Server, die Benutzung eines Web-Browsers und das Auslösen der Verbindung, durchführt. Ein Sitzungsskript kann beispielsweise eine Benutzerkennung, ein Benutzer-Paßword, eine IP-Zieladresse, beispielsweise eines Servers, welcher an das Kommunikationsnetz angeschaltet ist, die Benutzerkennung und das Paßword eines solchen Servers und das benutzte Dienst-und Kommunikationsprotokoll, wie z. B. das FTP (file transfer protocol) oder das HTTP (hyper text transfer protocol) enthalten. Wichtig ist darauf hinzuweisen, daß jedes Sitzungsskript eine vorbestimmte Anzahl von Operationen enthält, die von einem realen Benutzer an einem Personal Computer eingegeben werden könnten, um einen bestimmten IP-Dienst über das Kommunikationsnetz anzufordern.

Ferner ist wenigstens ein Sitzungsrechner mit der Steuereinrichtung verbunden. Jeder Sitzungsrechner weist mehrere, voneinander unabhängige Verbindungs-Schnittstellen auf, über die jeweils eine unabhängige IP-Verbindung zum Kommunikationsnetz aufbaubar ist. Jeder verbindungs-Schnittstelle ist wiederum eine Skript-Verarbeitungseinrichtuung, nachfolgend auch Lasterzeugungseinrichtung genannt, zugeordnet, die in Abhängigkeit eines von der Steuereinrichtung zugewiesenen Sitzungsskripts eine IP-Verbindung zu einer zu testenden Einrichtung aufbauen und die vorbestimmte Testprozedur starten kann. Auf diese weise ist es möglich, mehrere voneinander unabhängige Test-Sitzungen zwischen verschiedenen simulierten Benutzern und einer oder mehreren an das Kommunikationsnetz angeschalteten Einrichtungen, wie z. B. eines Routers oder eines Servers, automatisiert ablaufen zu lassen, ohne daß eine Bedienperson am Sitzungsrechner eine Sitzung manuell durchführen muß.

Die Komplexität des Testsystems kann dadurch erweitert werden, daß mehreren Lasterzeugungseinrichtungen eines Sitzungsrechners dieselbe oder verschiedene Sitzungsskripte zugeführt werden, die dann in Abhängigkeit des von der Steuereinrichtung jeweils zugewiesenen Sitzungsskripts eine separate IP-verbindung zu einer oder mehreren zu testenden Einrichtungen aufbauen und die dazugehörende Testprozedur starten können. Hierzu ist in jedem Sitzungsrechner eine Sitzungs-Verwaltungaeinrichtung implementiert, die jeder Lasterzeugungseinrichtung das von der Steuereinrichtung zugewiesene Sitzungsskript zuführt.

Die Sitzungsrechner sind so ausgelegt, daß sie jede bestehende Netzzugangstechnologie unterstützen können. Eine Anpassung an zukünftige Netzzugangstechnologien ist ohne weiters möglich. Beispielsweise kann jede Verbindungs-schnittstelle eines Sitzungsrechners mit einem analogen und/oder digitalen Modem verbunden sein. Darüber hinaus ist es sinnvoll, eine oder mehrere Schnittstellenkarten, beispielsweise LAN-Karten, in die Sitzungsrechner zu stecken, die jeweils mehrere Verbindungs-Schnittstellen aufweisen. Wiederum kann jede verbindungs-Schnittetelle eines Sitzungsrechners einem analogen oder disritglen Modem zugeordnet oder mit einem konventionellen Konzentrator zur Anbindung an ein ATM (Asynchroner Transfer Modus)-Netz verbunden sein. Als digitale Modems kommen beispielsweise ISDN-Modems oder ADSL (asymmetric digital subscriber line)-Modems in Frage. Auf diese weise kann über jede Verbindungs-Schnittstelle eines Sitzungsrechners eine separate IP-Verbindung hergestellt werden.

Die Steuereinrichtung und die mit ihr verbundenen Sitzungsrechner können entweder in einer einzigen Maschine implementiert sein, oder über ein Backbone-Netz verbunden sein.

Um die verschiedenen Testabläufe protokollieren und später auswerten zu können, ist in jedem:Sitzungsrechner ein Speicher zum Ablegen von Zustandsdaten jeder zu testenden Einrichtung und von Ergebniesehund Zustandsmeldungen jeder gestarteten Testprozedur implementiert. Als Zustandsdaten einer zu testenden Einrichtung werden insbesondere der Datendurchsatz von und zu der belasteten Einrichtung als auch deren Antwortzeit angesehen. Unter Antwortzeit einer Einrichtung ist hierbei die Zeit zu verstehen, die die Einrichtung benötigt, um auf eine bestimmte Anforderung eines Benutzers zu reagieren.

Die Sitzungsrechner übertragen die gespeicherten Zustandsdaten der getesteten Einrichtungen und die Ergebnisse und Zustandsmeldungen jeder aktiven Testprozedur zur Steuereinrichtung, die diese Daten an einer ihr zugeordneten Anzeigeeinrichtung darstellen und auswerten kann. Ferner ist der Steuereinrichtung eine Tastatur zugeordnet, über die beispielsweise neue Sitzungsskripte eingegeben oder in laufende Testprozeduren eingegriffen werden kann, um beispielsweise eine Testprozedur vorzeitig zu beenden oder um Parameter neu einzustellen. Auf diese Weise kann das Testsystem an jede Hardware- und Software-Änderung des Kommunkationsnetzes angepaßt werden, indem lediglich ein neues Sitzungsskript geschrieben und in die Steuereinrichtung abgelegt wird.

Bei dem auf einem IP-Standard basierenden Kommunikationsnetz handelt es sich beispielsweise um das Internet oder jedes beliebige firmenspezifische Intranet. Als zu testende Einrichtungen kommen beispielsweise Zugangsrouter und Server in Frage, die verschiedenen Diensteprovidern gehören. Server, die auf einem IP-Standard beruhen, sind allgemein bekannt und werden daher nicht im einzelnen erläutert.

Das technische Problem wird ebenfalls mit den verfahrensschritten des Anspruchs 10 gelöst:

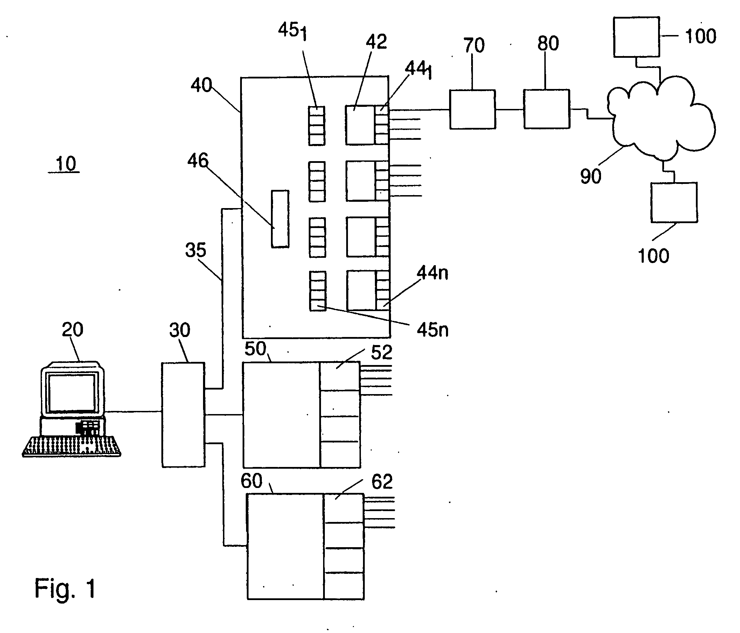

Die Erfindung wird nachstehend anhand eines Ausführungsbeispiels in Verbindung mit der beiliegenden Figur näher erläutert.

Die Figur zeigt ein mit 10 bezeichnetes Testsystem, mit dessen Hilfe die Funktionsfähigkeit beispielsweise des Internets 90, insbesondere dessen Netzkomponenten, wie z. B. Zugangsrouter 80 oder daran angeschaltete Server 100 unterschiedlicher Diensteprovider, im belasteten Zustand getestet werden kann. Das Testsystem 10 kann auch als IP-Lasttestsystem bezeichnet werden, um darauf hin zu weisen, daß das Testsystem sowie die hinsichtlich ihrer Belastung zu testenden Komponenten IP-Protokolle unterstützen. Das Testsystem 10 umfasst einen Steuer- und Bedienrechner 20, an den im vorliegenden Beispiel mehrere Testrechner, nachfolgend "Sitzungsrechner" genannt, über einen Sternkoppler 30 und ein sogenanntes Backbone-Netz 35, angeschaltet sind. Der Klarheit wegen sind lediglich drei Sitzungsrechnung 40, 50 und 60 schematisch dargestellt, wobei der Sitzungsrechner 40 detaillierter dargestellt ist. Die Beschreibung des schaltungstechnischen Aufbaus der Sitzungsrechner erfolgt daher vornehmlich in Bezug auf den Sitzungsrechner 40.

Der Steuer- und Bedienrechner 20 weist eine Tastatur auf, über die eine Bedienperson beispielsweise beliebige, zulässige Sitzungsskripte erzeugen kann, die anschließend in einem dem Steuer- und Bedienrechner 20 zugeordneten Speicher (nicht dargestellt) abgelegt werden.

Unter einem Sitzungsskript versteht man ganz allgemein die Beschreibung eines automatisierten Benutzers, der in Verbindung mit einem Sitzungsrechner IP-gestützte Operationen und Tätigkeiten automatisch durchführen kann, die auch ein realer Internet-User manuell an einem Personal Computer vornehmen könnte. Mit anderen Worten enthält jedes Sitzungsskript eine definierte Testprozedur, mit der ein typisches Verhalten eines realen Internet-Users an den Sitzungsrechnern simuliert werden kann. Jedes Sitzungsskript enthält eine Initialisierungsprozedur, eine Testprozedur, sowie eine Endprozedur. Dabei wird die Initialisierungs- und Endprozedur in jeder Sitzung nur ein einziges Mal ausgeführt, während die Testprozedur mehrmals ausgeführt werden kann. Ferner kann der Sitzungsskript-Schreiber bestimmte Fehler- und Zustandsmeldungen vorsehen, die während einer laufenden Testprozedur erzeugt werden. Grundsätzlich können beliebige Operationen und Aktionen in einem Sitzungsskript benutzt werden, solange sie auf dem IP-Standard beruhen. Darüber hinaus können über den Steuer- und Bedienrechner 20 auch Variable innerhalb eines Sitzungsskripts gesetzt werden, bevor die Testprozedur gestartet wird. Auf diese Weise können allgemein formulierte Sitzungsskripte an besondere Kundenwünsche schnell und problemlos angepaßt werden. Weitere Parameter, z.B. die Anzahl an Wiederholungen einer Testprozedur und Zeitablauf-Intervalle können ebenfalls in einem Sitzungsskript definiert werden.

Ferner kann eine Bedienperson an dem Steuer- und Bedienrechner 20 festlegen, an welchem oder an welchen Sitzungsrechnern und über welche Verbindungs-Schnittstellen der ausgewählten Sitzungsrechner eine Testprozedur gestartet werden soll, wie viele Testprozeduren gleichzeitig gestartet werden sollen, wie lange eine Testprozedur dauert oder wie häufig dieselbe Testprozedur wiederholt werden soll.

In jeden Sitzungsrechner 40, 50 und 60 sind beispielsweise jeweils vier LAN-Karten 42, 52 und 62 eingesteckt, die wiederum jeweils vier getrennte Verbindungs-Schnittstellen 44₁-44ₙ, auch Anschluß-Ports genannt, aufweisen. Im vorliegenden Beispiel ist jede Verbindungs-Schnittstelle zur Anbindung an das Internet 90 mit einem digitalen ADSL-Modem 70 verbunden, obwohl eine solche Anschaltung nur für die Verbindungs-Schnittstelle 44₁ gezeigt ist. Jedes Modem 70. kann über eine Verbindungsleitung mit einem Zugangsrouter 80 oder mit verschiednen Routern verbunden sein. Es versteht sich, daß das Testsystem 10 auch jede andere Zugangstechnik unterstützen kann. So können anstelle von ADSL-Modems auch ISDN-Router mit den Verbindungs-Schnittstellen der Sitzungsrechner verbunden werden. Es ist auch denkbar, die Verbindungs-Schnittstellen jeweils eines Sitzungsrechners mit einem an sich bekannten Konzentrator zu verbinden, der einen Zugang zu einem ATM-Netz bereitstellt. In einem anderen Fall ist es möglich, die Verbindungs-Schnittstellen über eine serielle Verbindung mit analogen oder digitalen Modems zu verbinden, mit deren Hilfe eine Wählverbindung zu einem beliebigen Router und damit zum Internet 90 hergestellt werden kann. Wie mit Bezug auf den Sitzungsrechner 40 dargestellt, ist jeder Verbindungs-Schnittstelle 44₁-44ₙ jedes Sitzungsrechners 40, 50 und 60 eine Skript-Verarbeitungseinrichtung, nachfolgend auch Lasterzeugungs-Einrichtung 45₁-45ₙ genannt,zugeordnet, welche weiter unten noch ausführlich erläutert wird. Es sei angemerkt, daß die Lasterzeugungseinrichtungen auch als Softwaremodul implementiert sein können.

Ferner ist in jedem Sitzungsrechner 40, 50 und 60 eine Sitzungs-Verwaltungseinrichtung implementiert, die die Aufgabe hat, ausgewählten Lasterzeugungs-Einrichtungen die vom Steuer- und Bedienrechner 20 zugewiesenen Sitzungsskripts zuzuführen. Mit Bezug auf den Sitzungsrechner 40 ist die Sitzungs-Verwaltungseinrichtung mit 46 bezeichnet. Ferner kann in jedem Sitzungsrechner 40, 50 und 60 ein Speicher vorgesehen sein, in dem die Zustandsdaten der zu testenden Einrichtungen sowie die Ergebnisse und Zustands- und Fehlermeldungen der gestarteten Testprozeduren abgelegt werden. Diese Zustandsdaten, Zustands- und Fehlermeldungen und Ergebnisse über die jeweiligen Testprozeduren können von jedem Sitzungsrechner zum Steuer- und Bedienrechner 20 übertragen und dort abgelegt werden. Der Steuer- und Bedienrechner ist ferner zum Auswerten der von den Sitzungsrechnern erhaltenen Meldungen und Ergebnisse und zu deren grafischer Darstellung über einen Monitor ausgebildet.

An dieser Stelle sei darauf hingeweisen, daß mit dem Testsystem 10 IP-Netze hinsichtlich ihrer Software- und Hardwarekomponenten unterschiedlicher Hersteller getestet werden können. Damit ist es möglich, die Funktionsfähigkeit von Routern und Servern innerhalb eines auf einem IP-Standard gestützten Netzes durch ein einziges zentrales Testsystem prüfen zu können.

Nachfolgend wird die Funktionsweise des Testsystems 10 anhand eines Szenarios näher erläutert.

Mit dem Testsystem 10 soll die geforderte Leistungsfähigkeit des an das Internet 90 angeschalteten Servers 100 überprüft werden. Zunächst sei hierfür angenommen, daß der Router 80 fehlerfrei arbeitet, so daß während des Testverfahrens auftretende Fehlermeldungen eindeutig dem zu testenden Server 100 zugeschrieben werden können.

Weiterhin sei angenommen, daß der Server 100 laut Angabe des Herstellers gleichzeitig bis zu 50 Benutzer bedienen kann, die beispielsweise über das FTP-Dienstprotokoll Dateien herunterladen wollen. In diesem Fall wählt die Bedienperson am Steuer- und Bedienrechner 20 das Sitzungsskript an, mit dem es möglich ist, automatisch einen Verbindungsaufbau zu dem zu testenden Server 100 herzustellen und eine vorbestimmte Datei aus einem vorbestimmten Verzeichnis des Servers herunterzuladen. Sollen im vorliegenden Testfall gleichzeitig 32 Anfragen an den Server 100 simuliert werden, wählt die Bedienperson am Steuer- und Bedienrechner 32 Verbindungs-Schnittstellen aus, über die jeweils eine Testprozedur laufen soll. Dazu werden entweder die Adressen der Verbindungs-Schnittstellen über die Tastatur des Steuer- und Bedienrechners 20 eingegeben oder entsprechende Ikons auf dem Monitor angeklickt. Beispielsweise wählt die Bedienperson alle 16 Verbindungs-Schnittstellen 44₁-44ₙ des Sitzungsrechners 40 und jeweils die ersten acht Verbindungs-Schnittstellen der beiden anderen Sitzungsrechner 50 und 60 aus, über die jeweils eine Testprozedur zum Server 100 laufen soll. Anschließend überträgt der Steuer- und Bedienrechner 20 das entsprechende Sitzungsskript und die Adressen der ausgewählten Verbindungs-Schnittstellen zu den jeweiligen Sitzungsrechnern. Die Sitzungs-Verwaltungseinrichtung in jedem Sitzungsrechner sorgt nunmehr dafür, daß das Sitzungsskript in alle Lasterzeugungseinrichtungen 45₁-45ₙ des Sitzungsrechners 40 sowie jeweils in die ersten acht Lasterzeugungseinrichtungen der Sitzungsrechner 50 und 60 geladen wird. Unter Steuerung des Sitzungsskripts baut jede Lasterzeugungseinrichtung über die ihr zugeordnete Verbindungs-Schnittstelle und das damit verbundene ADSL-Modem 70 eine IP-Verbindung beispielsweise über das Protokoll PPPoE zum Router 80 auf, der jeder Verbindungs-schnittstelle eine eigene IP-Adresse und ein Benutzer-Paßwort zuweist. Danach erfolgt eine Identifizierung zwischen dem Server 100 und der jeweiligen Verbindungs-Schnittstelle über das Protokoll PPP. Nach dieser Initialisierungsphase wird jede ausgewählte Lasterzeugungseinrichtung durch das Sitzungsskript veranlasst, den IP-Dienst FTP durchzuführen, durch den der Server aufgefordert wird, die entsprechende Datei an die ausgewählten Verbindungs-Schnittstellen herunterzuladen. Anschließend wird die Testprozedur von jeder angewählten Lasterzeugungseinrichtung beendet und die Verbindung ausgelöst. Während der einzelnen Testprozeduren werden vorbestimmte Zustands- und Fehlermeldungen in den Sitzungsrechnern zu den ausgewählten Verbindungs-Schnittstellenmeldungen protokolliert und gleichzeitig an den Steuer- und Bedienrechner 20 weitergeleitet, um dort die laufenden Testprozeduren überwachen zu können. Jeder Sitzungsrechner 40, 50 und 60 ist in der Lage, den Datendurchsatz sowie die Antwortzeit des Servers 100 zu ermitteln. Da der mittlere Datendurchsatz vom und zum Server 100 sowie die Antwortzeit des Servers vom Hersteller vorgegeben sind, kann aus dem berechneten Datendurchsatz und aus der ermittelten Antwortzeit für jede ausgewählte Verbindungs-Schnittstelle ermittelt werden, ob der Server 100 die 32 Testprozeduren fehlerfrei abgewickelt hat oder nicht. Auf diese Weise kann jede Internet-Komponente hinsichtlich ihrer geforderten Leistungsmerkmale automatisch durch das Testsystem 10 geprüft werden, indem entsprechende Sitzungsskripte in ausgewählte Lasterzeugungseinrichtungen der jeweiligen Sitzungsrechner geladen und ausgeführt werden.

Da die Verbindungs-Schnittstellen und die ihnen zugeordneten Lasterzeugungseinrichtungen jedes Sitzungsrechners unabhängig voneinander ausgebildet sind, können im vorliegenden Beispiel mit jedem Sitzungsrechner 16 unabhängig voneinander tätig werdende Benutzer simuliert werden. Im Grunde reicht eine einzige Bedienperson am Steuer- und Bedienrechner 20, um ein Testsystem mit beliebig vielen automatisierten Benutzern bedienen zu können.

Dank des Testsystems 10 ist es möglich, die Belastung einer zu testenden Einrichtung durch mehrere Netz-Benutzer automatisch zu prüfen. Hierzu ist es lediglich notwendig, daß für jedes zulässige Benutzerverhalten ein entsprechendes Sitzungsskript geschrieben und im Steuer- und Bedienrechner 20 abgelegt wird. Beliebige Testsituationen können dadurch simuliert werden, daß entsprechende Sitzungsskripts an ausgewählte Lasterzeugungseinrichtungen der jeweiligen Sitzungsrechner 40, 50 und 60 geladen werden, die dann unabhängig voneinander separate IP-Verbindungen zu den zu testenden Einrichtungen herstellen und darüber die Testprozeduren abwickeln.

## Patentansprüche

1. System (10) zum Testen des Belastungszustands wenigstens einer Einrichtung bei einer Belastung durch mehrere Nutzer, wobei die Einrichtung an ein auf einen IP-Standard gestütztes Kommunikationsnetz (90) angeschlossen ist, umfassend wenigstens eine programmierbare Steuereinrichtung (20) mit einer zugeordneten Speichereinrichtung, in der mehrere Sitzungsskripte ablegbar sind, die jeweils eine Initialisierungsprozedur, eine vorbestimmte Testprozedur und eine Endprozedur enthalten,
wenigstens einen mit der Steuereinrichtung (20) verbundenen Sitzungsrechner (40, 50, 60), der mehrere voneinander unabhängige Verbindungs-Schnittstellen (44₁ - 44ₙ) aufweist, denen jeweils eine Skript-Verarbeitungseinrichtung (45₁ - 45ₙ) zugeordnet ist, wobei jede Skript-Verarbeitungseinrichtung (45₁ - 45ₙ) zum Abarbeiten eines von der Steuereinrichtung (20) zugewiesenen Sitzungsskripts ausgebildet ist, wobei gleichzeitig mehrere Skript-Verarbeitungseinrichtungen (45₁ - 45ₙ) unter Steuerung der von der Steuereinrichtung (20) entsprechend zugewiesenen Sitzungsskripte unabhängige IP-Verbindungen über die ihnen zugeordneten Verbindungs-Schnittstellen (44₁ - 44ₙ) zu einer zu testenden Einrichtung (80, 100) aufbauen, Testprozeduren starten und die IP-Verbindungen abbauen können.

2. Testsystem nach Anspruch 1, **dadurch gekennzeichnet, dass**
in jedem Sitzungsrechner (40, 50, 60) eine Sitzungs-Verwaltungseinrichtung (46) implementiert ist, die jeder ausgewählten Skript-Verarbeitungsseinrichtung das ihr zugewiesene Sitzungsskript zuführt.

3. Testsystem nach Anspruch 1 oder 2, **dadurch gekennzeichnet, dass**
jeder Verbindungs-Schnittstelle (44₁ - 44ₙ) eines Sitzungsrechners (40, 50, 60) ein analoges oder digitales Modem (70) zugeordnet ist.

4. Testsystem nach Anspruch 1 oder 2, **dadurch gekennzeichnet, dass**
jede Verbindungs-Schnittstelle (44₁ - 44ₙ) eines Sitzungsrechners Teil einer Schnittstellenkarte (42, 52, 62) und mit einem Konzentrator verbunden ist, oder dass jeder Verbindungs-Schnittstelle (44₁ - 44ₙ) ein analoges oder digitales Modem (70) zugeordnet ist.

5. Testsystem nach einem der Anspruche 1 bis 4, **dadurch gekennzeichnet, dass**
mehrere Sitzungsrechner (40, 50, 60) über ein Backbone-Netz (35) mit der Steuereinrichtung (20) verbunden sind.

6. Testsystem nach einem der Anspruche 1 bis 5, **dadurch gekennzeichnet, dass**
jeder Sitzungsrechner (40, 50, 60) einen Speicher zum Ablegen von Zustandsdaten jeder zu testenden Einrichtung und von Ergebnissen und vorbestimmten Zustandsmeldungen jeder gestarteten Tastprozedur enthalt.

7. Testsystem nach Anspruch 6, **dadurch gekennzeichnet, dass**
der Steuereinrichtung (20) eine Anzeigeeinrichtung zur Darstellung der in jedem Sitzungsrechner abgelegten Zustandsdaten jeder zu testenden Einrichtung und der Ergebnisse und Zustandsmeldungen jeder gestarteten Testprozedur, eine Auswerteeinrichtung sowie eine Tastatur zugeordnet ist.

8. Testsystem nach einem der Anspruche 1 bis 7, **dadurch gekennzeichnet, dass**
das auf einem IP-Standard basierende Kommunikationsnetz (90) das Internet oder ein Intranet ist, und dass die zu testenden Einrichtungen (80, 100) Zugangs-Router und / oder Server sind.

9. Testsystem nach einem der Ansprüche 1 bis 8, **dadurch gekennzeichnet, dass**
ein Sitzungsskript eine Benutzerkennung, ein Benutzer-Passwort, wenigstens einen auf dem IP-Standard basierenden Dienst, definierte Zeitablaufe, Wiederholungsraten und / oder die Zieladresse der zu testenden Einrichtung enthalten kann.

10. Verfahren zum Testen des Belastungszustands wenigstens einer Einrichtung bei der Belastung durch mehrere Nutzer, wobei die Einrichtung an ein auf einen IP-Standard gestütztes Kommunikationsnetz (90) angeschlossen ist, mit folgenden Verfahrensschritten:
• Schreiben mehrerer Sitzungsskripte, die jeweils eine Initialisierungsprozedur, eine vorbestimmte, auf einem IP-Standard basierende Testprozedur und eine Endprozedur enthalten;
• Speichern der Sitzungsskripte in einer Steuereinrichtung (20);
• Auswählen an der Steuereinrichtung (20) mehrerer voneinander unabhängiger Verbindungs-Schnittstellen (44₁ - 44ₙ) wenigstens eines Sitzungsrechners (40, 50, 60), denen jeweils eine Skript-Verarbeitungseinrichtung (45₁ - 45ₙ) zugeordnet ist,
• Laden entsprechender Sitzungsskripte von der Steuereinrichtung (20) in die den ausgewählten Verbindungs-Schnittstellen (44₁ - 44ₙ) zugeordneten Skript-Verarbeitungseinrichtungen (45₁ - 45ₙ),
• die den ausgewählten Verbindungs-Schnittstellen (44₁ - 44ₙ) zugeordneten Skript-Verarbeitungseinrichtungen (45₁ - 45ₙ) initialisieren unter Steuerung der geladenen Sitzungsskripte gleichzeitig mehrere unabhängige IP-Verbindungen zu einer zu testenden Einrichtung (80, 100), starten die entsprechenden Testprozeduren und bauen die IP-Verbindungen ab
• Protokollieren jeder hinsichtlich der zu testenden Einrichtung (80, 100) gestarteten Testprozedur und Übertragen vorbestimmter Zustands- und / oder Fehlermeldungen während der laufenden Testprozeduren zur Steuereinrichtung (20), um die laufenden Testprozeduren überwachen zu können.

## Claims

1. A system (10) for testing the loaded state of at least one device when loaded by several users, whereby the device is connected to a communication network (90) based on an IP standard, comprising
at least one programmable control device (20) having an assigned memory device, which is capable of storing a plurality of session scripts, which each contain an initialization procedure, a predefined test procedure and an end procedure,
at least one session computer (40, 50, 60) connected to the control device (20) and comprising a plurality of mutually independent connection interfaces (44₁ - 44ₙ), to each of them a script processing device (45₁- 45ₙ) being assigned, wherein each script processing device (45₁ - 45ₙ) is implemented for executing a session script (45₁ - 45ₙ) allocated by the control device (20), whereby a plurality of script processing devices (45₁ - 45ₙ) under control of the session scripts, which are allocated correspondingly by the control device (20), may at the same time establish independent IP-connections via the assigned connection interfaces (44₁ - 44ₙ) to a device (80, 100) to be tested, initiate test procedures and release the IP-connections.

2. The test system according to Claim 1, **characterized in that** a session management device (46), which supplies each selected script processing device with the session script allocated to it, is implemented in each session computer (40, 50, 60).

3. The test system according to Claim 1 or 2, **characterized in that** an analog or digital modem (70) is assigned to each connection interface (44₁ - 44ₙ) of a session computer (40, 50, 60).

4. The test system according to Claim 1 or 2, **characterized in that** each connection interface (44₁ - 44ₙ) of a session computer is part of an interface card (42, 52, 62) and connected to a concentrator, or that an analog or digital modem (70) is assigned to each connection interface (44₁ - 44ₙ).

5. The test system according to one of Claims 1 to 4, **characterized in that** a plurality of session computers (40, 50, 60) are linked via a backbone network (35) to the control device (20).

6. The test system according to one of Claims 1 to 5, **characterized in that** each session computer (40, 50, 60) includes a memory for storing status data of each device to be tested and results and preset status messages of each initiated test procedure.

7. The test system according to Claim 6, **characterized in that** a display device for displaying the status data of each device to be tested, stored in each session computer, and the results and status messages of each initiated test procedure, an analysis device, as well as a keyboard are assigned to the control device (20).

8. The test system according to one of Claims 1 to 7, **characterized in that** the communication network (90) based on an IP standard is the Internet or an Intranet, and that the devices (80, 100) to be tested are access routers and / or servers.

9. The test system according to one of Claims 1 to 8, **characterized in that** a session script may include a user ID, a user password, at least one service based on the IP standard, defined time sequences, repetition rates, and / or the destination address of the device to be tested.

10. A method for testing the loaded state of at least one device when loaded by several users, wherein the device is connected to a communication network (90) based on an IP standard, comprising the following method steps:
• writing a plurality of session scripts, which each include an initialization procedure, a predefmed test procedure based on an IP standard and an end procedure;
• storing the session scripts in a control device (20);
• at the control device (20), selecting a plurality of mutually independent connection interfaces (44₁ - 44ₙ) of at least one session computer (40, 50, 60), to each of them assigned a script processing device (45₁ - 45ₙ),
• loading of corresponding session scripts from the control device (20) into the script processing devices (45₁ - 45ₙ) assigned to the selected connection interfaces (44₁ - 44ₙ),
• the script processing devices (45₁ - 45ₙ) assigned to the selected connection interfaces (44₁ - 44ₙ) initiate under the control of the loaded session scripts at the same time a plurality of independently IP-connections to a device (80, 100) to be tested, start the corresponding test procedures and release the IP-connection,
• logging of each of the test procedures started with respect to the device (80, 100) to be tested and transmitting of predefined status and / or failure messages during the running test procedures to the control device (20) for being able to monitor the running test procedures.

## Revendications

1. Système (10) permettant de tester l'état de sollicitation d'au moins une installation pendant une sollicitation par plusieurs utilisateurs, étant donné que l'installation est raccordée à un réseau de communication (90) basé sur un standard IP, comprenant au moins un organe de commande (20) programmable avec un organe de mémorisation qui y est affecté, organe de mémorisation dans lequel plusieurs scripts de session contenant chacun une procédure d'initialisation, une procédure de test prédéterminée et une procédure finale peuvent être stockés, au moins un ordinateur de session (40, 50, 60) relié à l'organe de commande (20) et présentant plusieurs interfaces de connexion (44₁ - 44ₙ) indépendantes l'une de l'autre à chacune desquelles est affecté un organe de traitement de scripts (45₁ - 45ₙ), étant donné que chaque organe de traitement de scripts (45₁ - 45ₙ) est conçu pour le traitement d'un script de session affecté par l'organe de commande (20), étant donné que plusieurs organes de traitement de scripts (45₁ - 45ₙ) peuvent simultanément, tout en commandant les scripts de session affectés en conséquence par l'organe de commande (20), établir des connexions IP indépendantes par l'intermédiaire des interfaces de connexion (44₁ - 44ₙ) qui leur sont affectées avec une installation (80, 100) à tester, lancer des procédures de test et désactiver les connexions IP.

2. Système de test selon la revendication 1,
**caractérisé en ce que**
dans chaque ordinateur de session (40, 50, 60) est implémenté un organe de gestion de session (46) qui achemine à chaque organe de traitement de scripts sélectionné le script de session qui lui est affecté.

3. Système de test selon la revendication 1 ou 2,
**caractérisé en ce que**
à chaque interface de connexion (44₁ - 44ₙ) d'un ordinateur de session (40, 50, 60) est affecté un modem (70) analogique ou numérique.

4. Système de test selon la revendication 1 ou 2,
**caractérisé en ce que**
chaque interface de connexion (44₁ - 44ₙ) d'un ordinateur de session est une partie d'une carte d'interface (42, 52, 62) et est reliée à un concentrateur ou que chaque interface de connexion (44₁ - 44ₙ) est affectée à un modem (70) analogique ou numérique.

5. Système de test selon l'une quelconque des revendications 1 à 4,
**caractérisé en ce que**
plusieurs ordinateurs de session (40, 50, 60) sont reliés à l'organe de commande (20) par l'intermédiaire d'un réseau fédérateur (35).

6. Système de test selon l'une quelconque des revendications 1 à 5,
**caractérisé en ce que**
chaque ordinateur de session (40, 50, 60) contient une mémoire pour le stockage de données d'état pour chaque installation à tester et de résultats et de messages d'états prédéfinis de chaque procédure de test lancée.

7. Système de test selon la revendication 6,
**caractérisé en ce que**
à l'organe de commande (20) sont affectés un organe d'affichage pour la représentation des données d'état, stockées dans chaque ordinateur de session, de chaque installation à tester et les résultats et messages d'états de chaque procédure de test lancée, un organe d'évaluation ainsi qu'un clavier.

8. Système de test selon l'une quelconque des revendications 1 à 7,
**caractérisé en ce que**
le réseau de communication (90) se basant sur un standard IP est l'Internet ou un Intranet, et que les installations (80, 100) à tester sont un routeur d'accès et/ou un serveur.

9. Système de test selon l'une quelconque des revendications 1 à 8,
**caractérisé en ce que**
un script de session peut contenir un code d'identification d'utilisateur, un mot de passe d'utilisateur, au moins un service se basant sur le standard IP, des processus temporels définis, des taux de répétition et/ou l'adresse de destination de l'installation à tester.

10. Procédé pour tester l'état de sollicitation d'au moins une installation pendant la sollicitation par plusieurs utilisateurs, étant donné que l'installation est raccordée à un réseau de communication (90) basé sur un standard IP, avec les différentes étapes suivantes:
- écriture de plusieurs scripts de session qui contiennent chacun une procédure d'initialisation, une procédure de test prédéfinie se basant sur un standard IP et une procédure finale ;
- mémorisation des scripts de session dans un organe de commande (20) ;
- sélection sur l'organe de commande (20) de plusieurs interfaces de connexion (44₁ - 44ₙ), indépendantes l'une de l'autre, d'au moins un ordinateur de session (40, 50, 60) à chacune desquelles est affecté un organe de traitement de scripts (45₁ - 45ₙ),
- chargement des scripts de session correspondants de l'organe de commande (20) dans les organes de traitement de scripts (451-45n) affectés aux interfaces de connexion (44₁ - 44ₙ) sélectionnées,
- les organes de traitement de scripts (451-45n) affectés aux interfaces de connexion (44₁ - 44ₙ) sélectionnées initialisent simultanément, tout en commandant les scripts de session chargés, plusieurs connexions IP indépendantes avec une installation (80, 100) à tester, lancent les procédures de test correspondantes et désactivent les connexions IP,
- Enregistrement de chaque procédure de test lancée pour l'installation (80, 100) à tester et transmission de messages d'état et/ou d'erreurs prédéfinis pendant les procédures de test en cours d'exécution à l'organe de commande (20) afin de pouvoir surveiller les procédures de test en cours d'exécution.
